# EUROPEAN PATENT APPLICATION

(11) **EP 4 521 822 A1**
(43) Date of publication of application: **12.03.2025**
(21) Application number: 24194739.9
(22) Date of filing: 15.08.2024
(51) Int. Cl.: H04W 36/00, H04W 48/18, H04W 60/00, H04W 12/06, H04W 12/08, H04W 12/043

(54) **SEAMLESS NETWORK SWITCHING**

(30) Priority: 07.09.2023 FI 20236001
(71) Applicant: Nokia Solutions and Networks Oy, 02610 Espoo (FI)
(72) Inventor: JAIN, Akshay, Helsinki (FI); RAO, Siddharth Prakash, Espoo (FI)
(74) Representative: Nokia EPO representatives

(57) **Abstract**

When a mobile apparatus, which has at least a subscriber identity for a first cellular network, another subscriber identity to a second cellular network and information on a geographical area of the second network, is attached to the first network and determines that it is within geographical area of a second network, it performs a decision to switch networks, and transmits information on the decision to a trusted platform entity. The trusted platform entity triggers, when the second network is online, path establishment between the networks, and when the path has been established, confirms the decision to the mobile apparatus, which then will attach to the second network.

## Description

### TECHNICAL FIELD

Various example embodiments relate to communication systems.

### BACKGROUND

Communication systems are under constant development. behavior. For example, non-public cellular networks are being deployed more and more, and it is possible that users with their user apparatuses attached to a public cellular network move to an area covered also by a non-public cellular network. A solution enabling a smooth switching from the public cellular network to the non-public cellular network is desired.

### SUMMARY

The independent claims define the scope, and different embodiments are defined in dependent claims.

According to an aspect there is provided a mobile apparatus comprising at least: means for storing first subscriber information for attaching to a first network; means for storing for at least one second network, per a second network, second subscriber information for attaching to the second network and geographical information at least indicating geographical area of the second network, wherein a second network is preferred over the first network and has a geographical area at least partially overlapping with the first network; means for attaching to a network using corresponding subscriber information; means for establishing, after being attached to a network, sessions for data traffic via the network; means for obtaining location information of the mobile apparatus; means for determining, when the mobile apparatus is attached to the first network and the location information has been obtained, whether the apparatus is within a geographical area of a second network; means for performing, when the mobile apparatus is within the geographical area of the second network and attached to the first network, a decision to switch from the first network to the second network; means for transmitting to a trusted platform entity, via the first network, an indication of a decision to switch from the first network to the second network; and means for performing the switch after receiving from the trusted platform entity information confirming the decision.

According to an aspect there is provided an apparatus for a trusted party platform entity, the apparatus comprising: means for receiving, via a first network, from a mobile apparatus, at least an indication of a decision to switch from the first network to a second network; means for determining, whether the second network is online; means for triggering, when the second network is online, path establishment between the first network and the second network; means for receiving information indicating that the path has been established; and means for transmitting, when the second network is online and the path has been established, to the mobile apparatus information confirming the decision.

According to an aspect there is provided a method comprising: storing first subscriber information for attaching to a first network; storing for at least one second network, per a second network, second subscriber information for attaching to the second network and geographical information at least indicating geographical area of the second network, wherein a second network is preferred over the first network and has a geographical area at least partially overlapping with the first network; attaching to a network using corresponding subscriber information; establishing, after being attached to a network, at least one session for data traffic via the network; obtaining location information; determining, when attached to the first network and the location information has been obtained, whether location is within a geographical area of a second network; performing, when attached to the first network and the location is within the geographical area of the second network, a decision to switch from the first network to the second network; transmitting to a trusted platform entity, via the first network, an indication of a decision to switch from the first network to the second network; and performing the switch after receiving from the trusted platform entity information confirming the decision.

According to an aspect there is provided a method comprising: receiving, via a first network, from a mobile apparatus, at least an indication of a decision to switch from the first network to a second network; determining, whether the second network is online; triggering, when the second network is online, path establishment between the first network and the second network; receiving information indicating that the path has been established; and transmitting, when the second network is online and the path has been established, to the mobile apparatus information confirming the decision.

According to an aspect there is provided a computer readable medium comprising instructions which, when executed by an apparatus, cause the apparatus to perform at least a first process or a second process, wherein the first process comprises at least: storing first subscriber information for attaching to a first network; storing for at least one second network, per a second network, second subscriber information for attaching to the second network and geographical information at least indicating geographical area of the second network, wherein a second network is preferred over the first network and has a geographical area at least partially overlapping with the first network; attaching to a network using corresponding subscriber information; establishing, after being attached to a network, at least one session for data traffic via the network; obtaining location information of the apparatus; determining, when the apparatus is attached to the first network and the location information has been obtained, whether the apparatus is within a geographical area of a second network; performing, when the apparatus is within the geographical area of the second network and attached to the first network, a decision to switch from the first network to the second network; transmitting to a trusted platform entity, via the first network, an indication of a decision to switch from the first network to the second network; and performing the switch after receiving from the trusted platform entity information confirming the decision, wherein the second process comprises at least: receiving, via the first network, from a mobile apparatus, at least the indication of a decision to switch from the first network to the second network; determining, whether the second network is online; triggering, when the second network is online, path establishment between the first network and the second network; receiving information indicating that the path has been established; and transmitting, when the second network is online and the path has been established, to the mobile apparatus information confirming the decision.

According to an aspect there is provided a computer program comprising instructions, which, when executed by an apparatus, cause the apparatus to perform at least a first process or a second process, wherein the first process comprises at least: storing first subscriber information for attaching to a first network; storing for at least one second network, per a second network, second subscriber information for attaching to the second network and geographical information at least indicating geographical area of the second network, wherein a second network is preferred over the first network and has a geographical area at least partially overlapping with the first network; attaching to a network using corresponding subscriber information; establishing, after being attached to a network, at least one session for data traffic via the network; obtaining location information of the apparatus; determining, when the apparatus is attached to the first network and the location information has been obtained, whether the apparatus is within a geographical area of a second network; performing, when the apparatus is within the geographical area of the second network and attached to the first network, a decision to switch from the first network to the second network; transmitting to a trusted platform entity, via the first network, an indication of a decision to switch from the first network to the second network; and performing the switch after receiving from the trusted platform entity information confirming the decision, wherein the second process comprises at least: receiving, via the first network, from a mobile apparatus, at least the indication of a decision to switch from the first network to the second network; determining, whether the second network is online; triggering, when the second network is online, path establishment between the first network and the second network; receiving information indicating that the path has been established; and transmitting, when the second network is online and the path has been established, to the mobile apparatus information confirming the decision.

### BRIEF DESCRIPTION OF DRAWINGS

Embodiments are described below, by way of example only, with reference to the accompanying drawings, in which
Fig. 1 illustrates an exemplified high-level system architecture;
Fig. 2 illustrates an example functionality of a mobile apparatus;
Fig. 3 illustrates another example functionality of a mobile apparatus;
Fig. 4 illustrates an example functionality of a trusted platform entity;
Fig. 5 illustrates an example of information exchange;
Fig. 6 illustrates an example of information exchange;
Fig. 7 is a schematic block diagram; and
Fig. 8 is a schematic block diagram.

### DETAILED DESCRIPTION OF SOME EMBODIMENTS

The following embodiments are only presented as examples. Although the specification may refer to "an", "one", or "some" embodiment(s) and/or example(s) in several locations, this does not necessarily mean that each such reference is to the same embodiment(s) or example(s), or that a particular feature only applies to a single embodiment and/or single example. Single features of different embodiments and/or examples may also be combined to provide other embodiments and/or examples. Furthermore, words "comprising" and "including" should be understood as not limiting the described embodiments to consist of only those features that have been mentioned and such embodiments may contain also features/structures that have not been specifically mentioned. Further, although terms including ordinal numbers, such as "first", "second", etc., may be used for describing various elements, the elements are not restricted by the terms. The terms are used merely for the purpose of distinguishing an element from other elements. For example, a first network could be termed a network or a second network without departing from the scope of the present disclosure.

5G-Advanced, and beyond future wireless networks aim to support a large variety of services, use cases and industrial verticals, for example unmanned mobility with fully autonomous connected vehicles, other vehicle-to-everything (V2X) services, or smart environment, e.g. smart industry, smart power grid, or smart city, or cyber-physical system (CPS) (a system of collaborating computational elements controlling physical entities), just to name few examples. For example, CPS may enable the implementation and exploitation of massive amounts of interconnected ICT devices (sensors, actuators, processors microcontrollers, etc.) embedded in physical objects at different locations. Mobile cyber physical systems, in which the physical system in question may have inherent mobility, are a subcategory of cyber-physical systems. Examples of mobile physical systems include mobile robotics and electronics transported by humans or animals. To provide variety of services with different requirements, such as enhanced mobile broadband, ultra-reliable low latency communication, massive machine type communication, wireless networks are envisaged to adopt network slicing, flexible decentralized and/or distributed computing systems and ubiquitous computing, with local spectrum licensing, spectrum sharing, infrastructure sharing, and intelligent automated management underpinned by mobile edge computing, artificial intelligence, for example machine learning, based tools, cloudification and blockchain technologies. For example, in the network slicing multiple independent and dedicated network slice instances may be created within the same infrastructure to run services that have different requirements on latency, reliability, throughput and mobility.

6G (sixth generation) networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G will include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

The evolvement has made it also easier to establish and manage non-public cellular networks. For example, hospitals, stores, enterprise/campuses, factory floors, etc., are increasingly deploying non-public cellular networks to meet their diverse traffic and/or security requirements. A non-public cellular network uses the same technology as public cellular networks, like public land mobile networks, but a private entity/organization, which is not selling communications services to customers, controls all aspects of its non-public cellular network. A non-public cellular network may be deployed in a variety of configurations utilizing both virtual and physical elements. The non-public cellular network may be a complete stand-alone network, a network hosted by a public cellular network, or offered as a slice of the public cellular network. One of the features of a cellular network, including a non-public cellular network, is that to access the network, a subscription is needed. Hence, a non-public cellular network is different than a wireless local area network based on the IEEE 802.11 family of standards, e.g. a Wi-Fi network, or a wireless local area network based on any corresponding standards, e.g. a Li-Fi network, not requiring subscription.

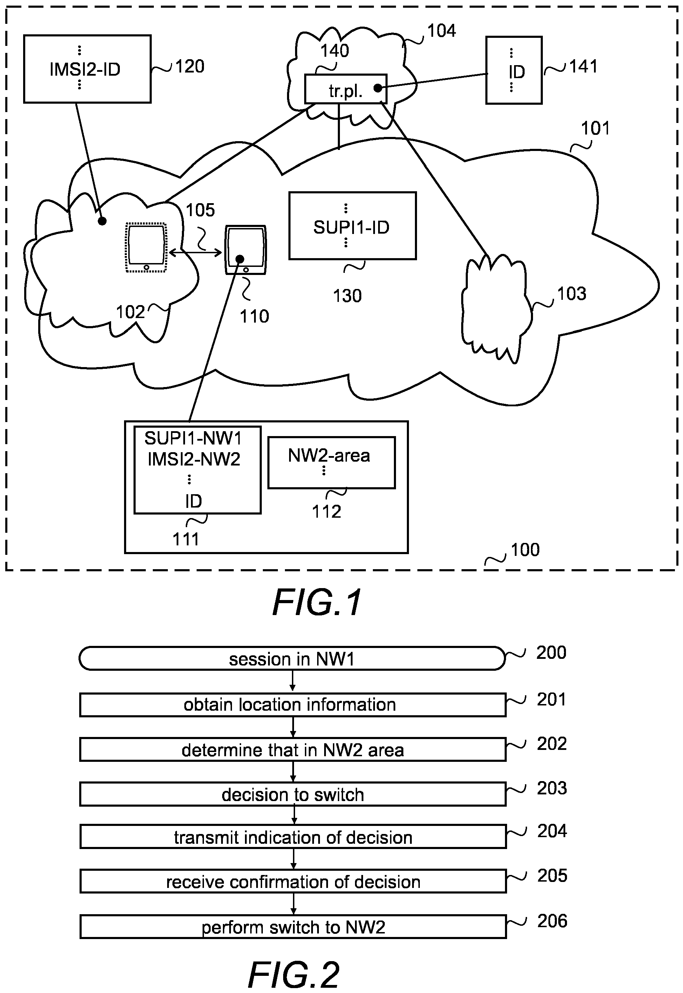

Fig. 1 illustrates an extremely exemplified high-level system architecture only showing some entities, all being logical units, whose implementation may differ from what is shown. The connections shown in Fig. 1 are logical connections; the actual physical connections may be different. The examples are described herein using principles and terminology of 5G without limiting the examples, and the terminology used to the 5G. A person skilled in the art may apply the solutions and examples to other communication systems, for example before 5G, e.g. Long-term evolution (LTE), 4G, 3G, beyond 5G, e.g. 6G, 7G, provided with necessary properties.

The non-limiting example of a system 100 illustrated in Fig. 1 comprises a first network 101, which may be a public cellular network, a second network 102, which may be a non-public cellular network, and a third network 103, which may be another non-public cellular network, just to illustrate that a public cellular network may comprise a plurality of non-public cellular networks with a geographical area partially or wholly overlapping with the public cellular network. Further, in the example of Fig. 1, the networks are connected to a cloud 104 (cloud infrastructure) providing one or more trusted platform (tr.pl.) entities 140. It should be appreciated that the first network 101 may be a non-public cellular network that has within its geographical area one or more non-public cellular networks with at least partially overlapping geographical areas.

The first network 101, the second network 102 and the third network 103 comprise each their own radio access network, and core network, and their own subscriber information. A mobile apparatus 110, which comprises subscriber information, may establish a connection to a radio access network, that uses a core network to provide connectivity services to data networks (not illustrated in Fig. 1), like the internet, an intranet, a wide area network, etc. For example, different remote monitoring and/or data collection services for different use cases may be reached via a data network.

The first network 101, the second network 102, and/or the third network 103, may be based on the 5G standalone architecture comprising a 5G access network and 5G core network, or 4G architecture comprising an LTE access network and evolved packet core network, a combination of 5G access network and the evolved packet core network, just to mention few possibilities. It should also be understood that the distribution of functions between core network operations and access node operations may differ in future wireless communication networks compared to that of the LTE or 5G, or even be non-existent.

In 5G access network, as in the LTE access network, access is provided by means of access network components (none illustrated in Fig. 1), such as access network apparatuses, or access devices. An access device may provide one or more cells, possibly with different cell accessibility per a cell, but a cell is provided by one access device. However, there may be overlapping cells, for example a macro cell (or an umbrella cell) provided by an access device operating in co-operation of access nodes providing smaller cells, such as micro-, femto- or picocells, which overlap at least partly within the macro cell. Further, a cellular access network may be implemented as a multilayer access network including several kinds of radio cells. There are a wide variety of access network components. A non-limiting lists of examples of the access network component, or what the access network component may comprise or be comprised in, include different types of base stations, such as eNBs, gNBs, split gNBs, transmission-reception points, network-controlled repeaters, nodes operationally coupled to one or more remote radio heads, satellites, donor nodes in integrated access and backhaul (IAB), fixed IAB nodes, mobile IAB nodes mounted on vehicles, for example, etc. At least some of the apparatuses in the access network may provide an abstraction platform to separate abstractions of network functions from the processing hardware.

A 5G access network may also comprise a non-terrestrial communication network, such as a satellite communication network, to enhance or complement the coverage of the terrestrial 5G radio access network. For example, satellite communication may support the transfer of data between the 5G radio access network and the core network, enabling more extensive network coverage.

In the 5G standalone architecture, which is a service based architecture, the 5G access network is connected to 5G core network. Components (elements, functional units) in the 5G core network may be implemented as applications, defined using network functions that may be cloud-native network functions, for example virtualized network functions or container network functions. A network function supports or hosts a collection of services, including applications, and offers one or more services to other network functions in the network. The network functions may be deployed as microservices. In the service-based architecture there are service consumers and service producers. A service consumer is a network function requesting a service from another network function, which is a service producer that provides the service as a reply or a response. The access and mobility management function (AMF) is responsible for connection and mobility management functionality. The session management function (SMF) handles the packet data unit (PDU) session related functionalities. The authentication server function (AUSF) works as the authenticator for the mobile apparatus 110 while the Unified Data Management (UDM) stores the subscription profile of the subscriber. One or more user plane functions (UPFs)s take care of data plane functionalities within the 5G system. The network repository function (NRF) in the 5G Core (5GC) network enables the discovery and the selection of network function (NF) instances and their supported services.

The evolved packet core network comprises different subcomponents. The mobility management entity (MME) is responsible for authenticating the mobile apparatus 110. The serving gateway (SGW) is an anchor point for user data of the mobile apparatus while the mobile apparatus is moving within the radio access network. The packet data network gateway (PGW) is connecting the network to the packet data networks. The home subscriber server is a database that stores subscriber information (subscription information of the subscriber).

The mobile apparatus 110 may be any electrical device, or apparatus, connectable to an access network and configurable to be in a wireless connection on one or more communication channels, including one or more control channels, with an access network component providing a cell, for example. By way of example rather than limitation, the mobile apparatus 110 may be referred to as device component, a mobile apparatus, a terminal device, a communication device, a user equipment (UE), a subscriber station, a portable subscriber station, a mobile station, or an access terminal. A non-limiting lists of examples of the mobile apparatus 110, or what the mobile apparatus 110 may comprise or be comprised in, include a mobile phone, a cellular phone, a smart phone, a voice over internet protocol (VoIP) phone, a wireless local loop phone, a device using a wireless modem, a reduced capability (RedCap) device, a portable computer, a desktop computer, laptop-embedded equipment (LEE), laptop-mounted equipment (LME), a smart device, a multimedia device, an image capture terminal device, such as a digital camera, a gaming terminal device, a music storage and playback appliance, a drone, a vehicle, an automated guided vehicle, an autonomous connected vehicle, a vehicle-mounted wireless terminal device, a wireless endpoint, an internet of things device, an industrial internet of things device, a device operating in an industrial and/or an automated processing chain contexts, a consumer electronics device, a consumer internet of things device, a mobile robot, a mobile robot arm, a sensor, a surveillance camera, an eHealth related device, a medical monitoring device, a medical device, for example for remote surgery, a wearable device, such as a smart watch, a smart ring, a head-mounted display (HMD), an on-person device, etc. The mobile apparatus may also be part of a group of mobile apparatus components seen as mobile apparatus by the wireless network.

The mobile apparatus 110 may be configured to support multiple subscriber identities. Such an apparatus is called in 5G a multi-USIM device, or a MUSIM device. For that purpose, the mobile apparatus may comprise one or more subscriber identity modules, a module per a subscription for corresponding subscriber information, for example. In 5G, a universal subscriber identity module (USIM) is a software application residing in a hardware part, called a universal integrated circuit card. The hardware part may be a removable card comprising the universal integrated circuit or a permanently attached universal integrated circuit (embedded-SIM).The universal integrated circuit card may contain multiple universal subscriber identity modules, thereby supporting multiple subscriber identities. For example, there may be subscriber identities for different generations of mobile wireless communication networks, including predecessors of 5G, and future wireless communication networks beyond 5G, and/or multiple subscriber identities for the substantially same generation wireless communication networks. Further, subscriber identities may be from different network operators. A mobile apparatus configured to support multiple subscriber identities may be implemented to allow one, or some, of corresponding multiple subscriber identity entities to be in an active state (connected state), while the other/others is/are in an inactive state or in an idle state.

In the illustrated example of Fig. 1, it is assumed that the mobile apparatus 110 has subscriber identities at least to the first network 101 and to the second network 102, the first network 101 is a 5G network and the second network 103 is an LTE -based network, and that the networks, as well as the mobile apparatus 110 and the trusted platform entity 140 are configured to use a separate identifier to identify the subscriber for network switching purposes, as will be described in more detail below. The separate identifier identifies uniquely a subscriber (owner) of the multiple subscriptions (multiple subscriber identities), but is not usable to access any of the networks. In the illustrated non-limiting example of Fig. 1, the subscriber identities 111 in the mobile apparatus 111 contains, as subscriber information for the first network (NW1), a subscription permanent identifier (SUPI1), as subscriber information for the second network (NW2), an international mobile subscriber identity (IMSI2), and the separate identifier (ID). A unified data manager 130 in the first network 101 comprises in subscription profiles the subscription permanent identifier (SUPI1) associated with the separate identifier ID, and a home subscriber server 120 in the second network 102 comprises the international mobile subscriber identity (IMSI1) associated with the separate identifier ID. Further, the trusted platform entity 140 comprises a database 141, for example, storing at least the separate identifier for authentication purposes to the platform, for example. Naturally the information stored may comprise further information not disclosed herein.

In another implementation, subscriber information stored in the network does not comprise the separate identifier, the trusted platform is configured to store separate identifiers, possibly associated with corresponding subscriber identities. Still in a further implementation, the subscriber information stored in the network comprises the separate identifier but the trusted platform does not store any identifier.

The use of the separate identifier, associated with subscriber identities as described above, contributes to reduce the requirements for many-to-many roaming agreements since it allows for many-to-one agreements to ensure seamless mobility provided by the examples disclosed herein. Further, the use of the separate identifier avoids the exchange of any subscriber identifiers of the networks for authorization purposes in the cloud platform entity as well as for any control communication that flows outside the administrative region of a 5G network.

Further, the mobile apparatus 110 is configured to store to a memory portion 112, for the network switching purposes, at least per a non-public network for which there is subscriber information, geographical area information of the non-public network. The memory portion 112 comprising the geographical area may be part of a memory of the mobile apparatus or the memory portion 112 may be part of the corresponding subscriber module. The geographical area may define boundaries, e.g. geolocation boundaries, of the non-public network. The geographical area may be smaller than actual coverage area of the non-public network. The list of non-public networks with corresponding geographical area information may be transmitted to the mobile apparatus by over-the-air programming procedures, for example.

It should be appreciated that subscriber identities, or temporary subscriber identities, for example, may be used instead of the separate identifier, in which case subscriber information stored in the network and/or in the trusted platform will not be associated with the separate identifier, and the separate identifier will not be stored in the mobile apparatus.

The trusted platform entity 140 may locate, as in the example of Fig. 1, in a cloud 104 that is external to the networks, or it may be a cloud service provided by one of the networks, for example by the first network, or the trusted platform entity 140 may be a central control entity comprised in the first network, for example. In other words, a computing apparatus, such as a server, e.g. a cloud server or an edge server, connectable to the networks, may operate as the trusted platform entity 140. The trusted platform entity 140 provides a peer for the mobile apparatus, such as a peer for an application running in the mobile apparatus, the peer assisting network switching process, as will be described in more detail below.

Usually, when a mobile apparatus have subscriber information to a non-public cellular network and the public cellular network, the non-public cellular network is preferred over the public cellular network. For example, when the mobile apparatus 110, which may be attached to the first network 101, moves (indicated by 105) to the second network 102, it should switch to the second network 102, and when the mobile apparatus 110 is attached to the second network 102 but moves (indicated by 105) to an area not overlapping with the second network, it should switch to the first network 101. To enable smooth switch, the mobile apparatus 110 may be configured to perform a decision to switch a network.

Fig. 2 illustrates an example functionality of a mobile apparatus, that is configured to perform the decision to switch a network. In the example it is assumed that the mobile apparatus stores first subscriber information for attaching to a first network, and for at least one second network, per a second network, second subscriber information for attaching to the second network and geographical information at least indicating geographical area of the second network. The second network(s) is(are) preferred over the first network and has a geographical area at least partially overlapping with the first network. The first network may be, for example, a public land mobile network, and a second network a non-public cellular network within coverage area of the public land mobile network.

Referring to Fig. 2, it is assumed that the mobile apparatus has used the first subscriber information, is attached to the first network NW1 and has established a session for data traffic via the first network (block 200). It should be appreciated that there may be multiple sessions, but for the sake of clarity of description, a session is used as a non-limiting example.

Location information of the mobile apparatus is obtained in block 201. The location information may be obtained by using any known or future methods. For example, the mobile apparatus may comprise a GPS (global positioning system) receiver module to determine its location. Further examples include Galileo-satellite based positioning, Glonass based positioning, BeiDou based positioning, NavIC based positioning, etc., resulting to geographical location coordinates of the mobile apparatus.

When the mobile apparatus is attached to the first network and the location information has been obtained, it is determined whether the apparatus is within a geographical area of a second network. In the illustrated example of Fig. 2 it is determined (block 202) that the mobile apparatus is within the geographical area of a second network NW2. In other words, the mobile apparatus has moved and entered the geographical area. Since the mobile apparatus is within the geographical area of the second network NW2 and attached to the first network NW1, a decision to switch from the first network to the second network is performed (block 203) by the mobile apparatus. Hence, an indication of a decision to switch from the first network to the second network is transmitted (block 204) to a trusted platform entity, via the first network. In an implementation, the indication may comprise the separate identifier. Further, the indication may comprise information indicating the second network, e.g. a network identifier.

In the illustrated example of Fig. 2 it is assumed that the switch can be performed. Hence, when information confirming the decision, i.e. a confirmation of the decision, is received (block 205), the switch to the second network NW2 is performed (block 206). The information confirming the decision may be a request to set up a security context with the second network and/or perform a handover to the second network.

The switch to the second network may comprise detaching from the first network, and attaching to the second network using corresponding second subscriber information.

As can be seen from the above example, the switch will be generated automatically, without any user input.

Compared to a solution in which network identifiers are used to determine, whether the mobile apparatus is within the area of second network while being attached to the first network, use of the geolocation information ensures that the mobile apparatus is actually within the area of the second network, and hence a ping-pong effect, which the use of mere identifiers may cause.

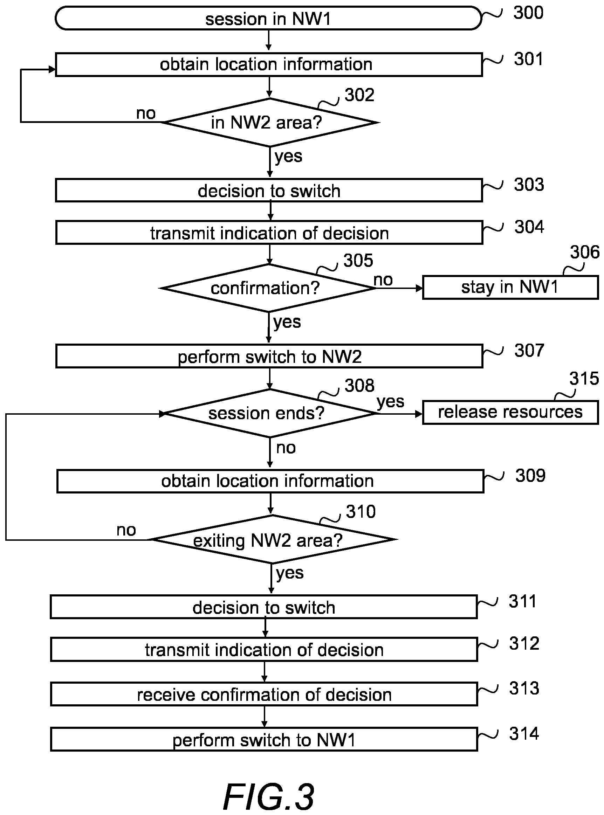

Fig. 3 illustrates another example functionality of a mobile apparatus, that is configured to perform the decision to switch a network. The assumptions are the same as with Fig. 2. In other words, it is assumed that the mobile apparatus stores first subscriber information for attaching to a first network, and for a second network, second subscriber information for attaching to the second network and geographical information at least indicating geographical area of the second network. The second network is preferred over the first network and has a geographical area at least partially overlapping with the first network. The first network may be, for example, a public land mobile network, and a second network a non-public cellular network within coverage area of the public land mobile network.

Referring to Fig. 3, it is assumed that the mobile apparatus has used the first subscriber information, is attached to the first network NW1 and has established a session for data traffic via the first network (block 300). It should be appreciated that there may be multiple sessions, but for the sake of clarity of description, a session is used as a non-limiting example.

Location information of the mobile apparatus is obtained in block 301, for example as described above with block 201. Then it is determined (block 302), using the location information, whether the apparatus is within a geographical area of a second network. If not (block 302: no), the process returns to block 301 to obtain location information next time.

When it is determined (block 302: yes) that the mobile apparatus is within the geographical area of the second network NW2 (the mobile apparatus has moved and entered the geographical area of NW2), and is attached to the first network NW1, a decision to switch from the first network to the second network is performed (block 303) by the mobile apparatus. Hence, an indication of a decision to switch from the first network to the second network is transmitted (block 304) to a trusted platform entity, via the first network. In an implementation, the indication may comprise the separate identifier. Further, the indication may comprise information indicating the second network, e.g. a network identifier.

Then a confirmation for the decision is waited for (block 305) as a response to the decision. If a rejection is received (block 305: no), the mobile apparatus will stay (block 306) attached to the first network NW1. The mobile apparatus may be configured to indicate the second network as a non-allowable network, or turned off network, as long as it will stay attached to the first network, or a predetermined time, resulting that a decision is not performed in vain. When the second network is indicated as a non-allowable network (turned off network), the check in block 302 will be skipped. Naturally, the check in block 302 may be performed for other non-public second networks after location information has been obtained.

In an implementation, a confirmation is waited for a predetermined time, and if no confirmation or rejection is received, transmitting the indication of the decision (block 304) is repeated until a confirmation or rejection is received or transmitting the indication of the decision has been repeated a predetermined number of times, for example three times. In an implementation, if after the predetermined number of times no response is received, it is interpreted as a rejection.

If the confirmation of the decision is received (block 305: yes), the switch to the second network NW2 is performed (block 307). The information confirming the decision may be a request to set up a security context with the second network and/or perform a handover to the second network. The switch to the second network may comprise detaching from the first network, and attaching to the second network using corresponding second subscriber information.

Then, in the illustrated example, it is monitored, whether the session ends (block 308), or whether the mobile apparatus is exiting (block 310), using location information obtained (block 309), the geographical area of the second network. By determining, whether the mobile apparatus is exiting while still within the geographic boundaries of the second network, it is tried to guarantee that the switch can be performed while the mobile apparatus is still within the geographic boundaries and can be served by the second network, and hence the session can continue without a break.

When it is determined that that the mobile apparatus is exiting the geographical area of the second network (block 310: yes), a decision to switch from the second network to the first network is performed (block 311). Then an indication of a decision to switch from the second network to the first network is transmitted (block 312) to the trusted platform entity, via the second network. In the illustrated example it is assumed that a confirmation of a decision is received (block 313). The confirmation may be a request to set up a security context with the first network and/or perform a handover to the first network. Then a switch to the first network is performed (block 314).The switch to the first network may comprise attaching to the first network using corresponding first subscriber information, and detaching from the second network.

It should be appreciated that the process includes, even though not illustrated for the clarity of description, monitoring also when the mobile apparatus is attached to the first network, continuity of the session.

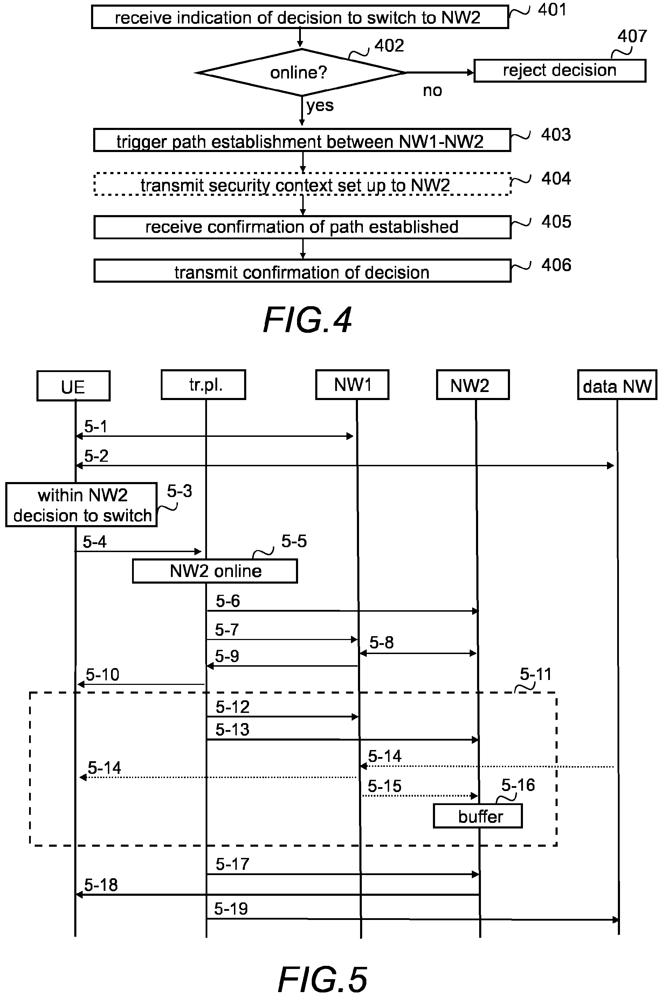

Fig. 4 illustrates an example functionality of a trusted platform entity. In the illustrated example, it is assumed that when a path establishment is triggered, the path will be established.

Referring to Fig. 4, when an indication of a decision to switch from a first network to a second network (NW2) is received (block 401) from a mobile apparatus, it is determined (block 402), whether the second network is online. The indication may comprise only information on the second network, or the indication may further comprise a separate identifier identifying the requesting entity to the trusted platform.

If the second network is online (block 402: yes), at least a path establishment between the first network NW1 and the second network NW2 is triggered (block 403) to ensure continuity of one or more sessions of the mobile apparatus. Further, a request to set up a security context for the mobile apparatus may be transmitted (block 404) to the second network. By transmitting the request to set up a security context reduces latency in an authentication phase of an attachment procedure, when the mobile apparatus attaches (tries to attach) to the second network., However, it should be appreciated that in an implementation no request to set up the security context is transmitted to the second network.

When a confirmation that the path has been established is received (block 405), a confirmation of the decision is transmitted (block) 406 to the mobile apparatus. As described above, the confirmation may be a request to set up a security context with the second network and/or perform a handover to the second network. It should be appreciated that if no confirmation that the path has been established is received, e.g. it is indicated that path establishment failed, the decision will be rejected.

If the second network is not online (block 402: no), the decision to switch to it will be rejected (block 407).

In an implementation, when the indication of the decision comprises the separate identifier, the trusted platform entity may authenticate or authorize the re-quester by checking, whether a corresponding identifier is stored into its memory. In addition to, or alternatively, the trusted platform entity may use the separate identifier for network switching purposes, e.g. by adding the separate identifier to a message triggering the path establishment.

In an implementation, the trusted platform entity is configured to orchestrate transitions of one or more ongoing sessions of the mobile apparatus from the first network to the second network while maintaining, per a session, the session as ongoing for data traffic during a transition of the session. For example, the path establishment may be triggered by transmitting to the first network a request to forward data traffic targeted to the mobile apparatus both to the mobile apparatus and to the second network, and the orchestration include that when the trusted platform entity detects, per a transition of a session from the first network to the second network, that the transition is completed, it may cause that, after the transition is completed, the session is updated to pass via the second network.

In the process of Fig. 4, the first network may be a public cellular network and the second network a non-public cellular network, or vice versa.

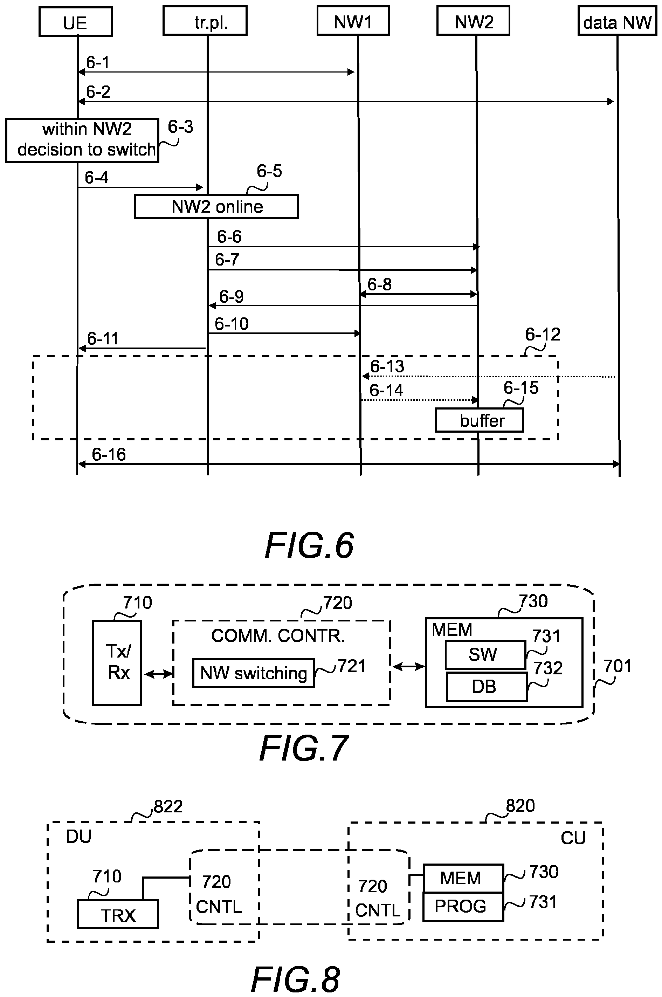

Fig. 5 and Fig. 6 illustrate different non-limiting examples of information exchange. In the examples it is assumed, for the sake of description, that networks are online, and the network switch succeeds. Also in the examples it is assumed that the mobile apparatus, denoted by UE, has at least first subscriber information with which it has access to the first network and second subscriber information with which it has access to the second network and geographical information at least indicating geographical area of the second network. Further, it is assumed that the second network is preferred over the first network and has a geographical area at least partially overlapping with the first network.

Referring to Fig. 5, the mobile apparatus UE, attaches (messages 5-1) to the first network NW1 using the first subscriber information, and after that establishes (messages 5-2) via the first network NW1 a session to a data network (data NW). Any known or future methods to attach and establish sessions may be used.

Then the UE determines (block 5-3), using location information obtained as described above e.g. with block 201, that the UE is within a geographical area of the second network NW2, and performs (block 5-3), a decision to switch from the first network to the second network. Therefore the UE transmits (message 5-4) to the trusted platform entity (tr.pl), via the first network, an indication of a decision to switch from the first network to the second network.

The indication may comprise the separate identifier, and the trusted platform may authenticate the UE using the separate identifier in block 5-5.

After a successful authentication, or if no authentication is performed, upon receiving the indication (message 5-4), the trusted platform then performs a check, whether the second network is online, i.e. functioning, and in the illustrated example determines (block 5-5) that the second network is online. In the illustrated example, the trusted platform hence triggers path establishment between the first network and the second network by transmitting to the second network at least a request (message 5-6) to set up a security context for the mobile apparatus, and to the first network (message 5-7) a request to establish a path between the networks for the UE, or for the session of the UE. The request to establish the path (message 5-7) may be a request to set up a redundant path. For example, the request may be sent to an MPTCP (multipath transmission control protocol) proxy in the first network, to setup a redundant TCP (transmission control protocol) path to the private cellular network. Both requests (message 5-6 and message 5-7) may comprise the separate identifier which may be used by the networks to identify corresponding subscriptions. The path is established (messages 5-8) between the networks, and, in the illustrated example, the first network transmits (message 5-9) to the trusted platform entity information indicating that the path has been established. The security context set up for the path between the two networks is managed by the networks, according to their configuration, and is not discussed herein.

Then, in the illustrated example, the trusted platform entity confirms the decision to switch to the UE by sending (message 5-10) a request to set up a security context to the second network. In another implementation, the request may be a request to perform a handover to the second network. Still a further possibility includes that the request is a request to set up the security context with the second network and to perform the handover to the second network. The confirmation (message 5-10) triggers an attach procedure (5-11), not described in detail herein, to the second network using the second subscriber information. The trusted platform entity further may further orchestrate the transition of the ongoing session from the first network to the second network while maintaining, per a session, the session as ongoing for data traffic during a transition of the session by transmitting to the first network a request (message 5-12) to forward the data sent in the session to the UE also to the second network and by transmitting to the second network a request (message 5-13) to buffer data received over the established path. In another implementation no specific requests are transmitted since e.g. messages 5-6, 5-7 may at least indirectly indicate the requests. The requests may be messages containing an indication to use multipath transmission control protocol or mobile internet protocol.

Hence, when during the attach procedure 5-11, data is received (message 5-14) from the data network, the first network transmits the data (message 5-14) to the UE but it also forwards (message 5-15) the data to the second network, which buffers (block 5-16) the data.

When the attach procedure to the second network has been completed, i.e. the transition from the first network to the second network is completed, in the illustrated example the trusted platform entity orchestrates the session update to pass via the second network by transmitting to the second network instruction (message 5-17) to update the path to pass via the second network, and sending corresponding instructions (message 5-19) to the data network. They both perform the updating (not illustrated in Fig. 5). Further, in the illustrated example, the second network, after receiving the instructions, transmits to the UE a corresponding instruction (message 5-18), which then updates the session correspondingly. Further (not illustrated in Fig. 5), the second network may forward to the UE the data buffered during the attach procedure.

The end result is that the session passes via the second network without being interrupted during the network switching. The original path via the first network for the session may be discarded or maintained, depending, for example, on mobility characteristics of the UE.

Referring to Fig. 6, the mobile apparatus UE, attaches (messages 6-1) to the first network NW1 using the first subscriber information, and after that establishes (messages 6-2) via the first network NW1 a session to a data network (data NW). Any known or future methods to attach and establish sessions may be used.

Then the UE determines (block 6-3), using location information obtained as described above e.g. with block 201, that the UE is within a geographical area of the second network NW2, and performs (block 6-3), a decision to switch from the first network to the second network. Therefore the UE transmits (message 6-4) to the trusted platform entity (tr.pl), via the first network, an indication of a decision to switch from the first network to the second network.

The indication may comprise the separate identifier, and the trusted platform may authenticate the UE using the separate identifier in block 6-5.

After a successful authentication, or if no authentication is performed, upon receiving the indication (message 6-4), the trusted platform then performs a check, whether the second network is online, i.e. functioning, and in the illustrated example determines (block 6-5) that the second network is online. In the illustrated example, the trusted platform hence triggers path establishment between the first network and the second network by transmitting to the second network at least a request (message 6-6) to set up a security context for the mobile apparatus, and also a request (message 6-7) to establish a path between the networks for the UE, or for the session of the UE. In the illustrated example, at least one of the requests (message 6-6 or 6-7) included at least an implicit request to buffer data received over the established path. Both requests (message 6-6 and message 6-7), or the first request (message 6-6) may comprise the separate identifier which may be used by the networks to identify corresponding subscriptions. The path is established (messages 6-8) between the networks, and, in the illustrated example, the second network transmits (message 6-9) to the trusted platform entity information indicating that the path has been established. The security context set up for the path between the two networks is managed by the networks, according to their configuration, and is not discussed herein.

Then, in the illustrated example, the trusted network platform entity orchestrates the transition of the ongoing session from the first network to the second network while maintaining, per a session, the session as ongoing for data traffic during a transition of the session by transmitting to the first network a request (message 6-10) to forward the data sent in the session to the second network. The request(s) (e.g message 6-6 and/or message 6-7 and/or message 6-10) may contain an indication to use multipath transmission control protocol or mobile internet protocol.

Further, the trusted platform entity confirms the decision to switch to the UE by sending (message 6-11) a request to set up a security context to the second network. In another implementation, the request may be a request to perform a handover to the second network. Still a further possibility includes that the request is a request to set up the security context with the second network and to perform the handover to the second network. The confirmation (message 6-11) triggers an attach procedure (6-12), not described in detail herein, to the second network using the second subscriber information.

In the illustrated example, when the attach procedure to the second network has been completed, i.e. the transition from the first network to the second network is completed, in the illustrated example also the session (messages 6-16) has been updated to pass via the second network. Further (not illustrated in Fig. 6), the second network may forward to the UE the data buffered during the attach procedure.

The end result is that the session passes via the second network without being interrupted during the network switching. The original path via the first network for the session may be discarded or maintained, depending, for example, on mobility characteristics of the UE.

As can be seen from the above examples, the process, in which the mobile apparatus performs the decision to switch using location information, requires less time (causing less latency) and less signaling compared to solutions in which an attached network performs the decision to switch, the decision requiring that the mobile apparatus is inquired to collect information, such as latitude, longitude, mobile country code, mobile network code, cell identification, adjacent cell information, radio signal quality, and radio signal strength, etc., and transmit the information periodically to the network for decision making, and once a decision to switch has been made, it is communicated to the mobile apparatus as a request to trigger the switching process. This causes latency compared to the solutions described. Further, in solutions in which the network performs the decision, if the decision to switch is lost, it may cause a failure to trigger the switching process, and hence a longer dwell time in the unpreferred network or a loss of connectivity.

The blocks, related functions, and information exchange (messages, signaling) described above by means of Fig. 1 to Fig. 6 are in no absolute chronological order, and some of them may be performed simultaneously or in an order differing from the given one. Other functions can also be executed between them or within them, and other information may be sent, and/or other rules applied. Some of the blocks or part of the blocks or one or more pieces of information can also be left out or replaced by a corresponding block or part of the block or one or more pieces of information.

Fig. 7 illustrates an apparatus 701 that may be configured to perform any functionality of an apparatus described herein. The apparatus 701 may be a mobile apparatus, examples of which are listed above. The apparatus 701 may be a trusted platform entity, examples of which are listed above. Further, the apparatus 701 may be a network component in the first network or in the second network, examples of which network components are listed above. Fig. 8 illustrates an apparatus that may implement distributed functionality of the apparatus illustrated in Fig. 7.

The apparatus 701 may comprise one or more communication control circuitry 720, such as at least one processor, and at least one memory 730, including one or more algorithms 731, such as a computer program code (software) wherein the at least one memory and the computer program code (software) are configured, with the at least one processor, to cause the apparatus to carry out any one of the exemplified functionalities of a corresponding apparatus, described above with any of Fig. 1 to Fig. 6. Said at least one memory 730 may also comprise at least one database 732.

Referring to Fig. 7, the one or more communication control circuitries 720 of the apparatus 701 comprise at least a network switching circuitry 721 which is configured to perform network switching related functionalities, e.g. perform the decision to switch, or trigger session switching when a target network is online, or perform data forwarding and buffering while attach procedure is ongoing. To this end, the network switching circuitry 721 of the apparatus 701 is configured to carry out at least some of the functionalities described above, e.g., by means of Fig. 1 to Fig. 6, using one or more individual circuitries.

Referring to Fig. 7, the memory 730 may be implemented using any suitable data storage technology, such as semiconductor based memory devices, flash memory, magnetic memory devices and systems, optical memory devices and systems, fixed memory and removable memory.

Referring to Fig. 7, the apparatus 701 may further comprise different interfaces 710 such as one or more communication interfaces (TX/RX) comprising hardware and/or software for realizing communication connectivity according to one or more communication protocols. The one or more communication interfaces 710 may enable connecting to the Internet and/or to a core network of a wireless communications network and/or to a radio access network and/or to other apparatuses within range of the apparatus. The one or more communication interface 710 may provide the apparatus with communication capabilities to communicate in a cellular communication system and enable communication to different network components or mobile apparatuses, e.g., terminal devices or user equipments, for example. The different interfaces 710 may further comprise an interface for receiving signals to determine a location of the apparatus. The one or more communication interfaces 710 may comprise standard well-known components such as an amplifier, filter, frequency-converter, (de)modulator, and encoder/decoder circuitries, controlled by the corresponding controlling units, and possibly one or more antennas.

In an embodiment, as shown in Fig. 8, at least some of the functionalities of the apparatus of Fig. 7 may be shared between two physically separate devices, forming one operational entity. Therefore, the apparatus may be seen to depict the operational entity comprising one or more physically separate devices for executing at least some of the described processes. Thus, the apparatus of Fig. 8, utilizing such shared architecture, may comprise a control unit CU 820, or a remote control unit, such as a host computer or a server computer, operatively coupled (e.g. via a wireless or wired connection) to a remote distributed unit DU 822 located in the apparatus or in a remote head of the apparatus. In an embodiment, at least some of the described processes may be performed by the CU 820. In an embodiment, the execution of at least some of the described processes may be shared among the DU 822 and the CU 820.

Similar to Fig. 7, the apparatus of Fig. 8 may comprise one or more communication control circuitries (CNTL) 720, such as at least one processor, and at least one memory (MEM) 730, including one or more algorithms (PROG) 731, such as a computer program code (software) wherein the at least one memory and the computer program code (software) are configured, with the at least one processor, to cause the apparatus to carry out any one of the exemplified functionalities of the mobile apparatus, or exemplified functionalities of the trusted platform entity, or exemplified functionalities of a network described above, e.g., by means of Fig. 1 to Fig. 6.

In embodiments, the CU 820 may generate a virtual network through which the CU 820 communicates with the DU 822. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the CU). External network virtualization is targeted to optimized network sharing. Another category is internal virtual networking which provides network-like functionality to the software containers on a single system. Virtual networking may also be used for testing the terminal device.

In embodiments, the virtual network may provide flexible distribution of operations between the DU and the CU. In practice, any digital signal processing task may be performed in either the DU or the CU and the boundary where the responsibility is shifted between the DU and the CU may be selected according to implementation.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or a terminal device or other computing or network device.

In an embodiment, at least some of the processes described in connection with Fig. 1 to Fig. 6 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Fig. 1 to Fig. 6 or operations thereof.

According to an embodiment there is provided a mobile apparatus comprising at least one processor and at least one memory storing instructions that, when executed by the at least one processor, cause the mobile apparatus at least to: store first subscriber information for attaching to a first network; store for at least one second network, per a second network, second subscriber information for attaching to the second network and geographical information at least indicating geographical area of the second network, wherein a second network is preferred over the first network and has a geographical area at least partially overlapping with the first network; attach to a network using corresponding subscriber information; establish, after being attached to a network, at least one session for data traffic via the network; obtain location information of the mobile apparatus; determine, when the mobile apparatus is attached to the first network and the location information has been obtained, whether the mobile apparatus is within a geographical area of a second network; perform, when the mobile apparatus is within the geographical area of the second network and attached to the first network, a decision to switch from the first network to the second network; transmit to a trusted platform entity, via the first network, an indication of a decision to switch from the first network to the second network; and performing the switch after receiving from the trusted platform entity information confirming the decision

According to an embodiment there is provided an apparatus comprising at least one processor and at least one memory storing instructions that, when executed by the at least one processor, cause the apparatus at least to: receive, via a first network, from a mobile apparatus, at least an indication of a decision to switch from the first network to a second network; determine, whether the second network is online; trigger, when the second network is online, path establishment between the first network and the second network; receive information indicating that the path has been established; and transmit, when the second network is online and the path has been established, to the mobile apparatus information confirming the decision.

Embodiments and examples as described may also be carried out in the form of a computer process defined by a computer program or portions thereof. Embodiments of the functionalities described in connection with Fig. 1 to Fig. 6 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. The term "non-transitory," as used herein, is a limitation of the medium itself (i.e., tangible, not a signal ) as opposed to a limitation on data storage persistency (e.g., RAM vs. ROM). Coding of software for carrying out the embodiments as shown and described is well within the scope of a person of ordinary skill in the art.

Even though the embodiments have been described above with reference to examples according to the accompanying drawings, it is clear that the embodiments are not restricted thereto but can be modified in several ways within the scope of the claims. Therefore, all words and expressions should be interpreted broadly and they are intended to illustrate, not to restrict, the embodiment. It will be obvious to a person skilled in the art that, as technology advances, the inventive concept can be implemented in various ways within the scope of the independent claims. Further, it is clear to a person skilled in the art that the described embodiments may, but are not required to, be combined with other embodiments in various ways within the scope of the independent claims.

## Claims

1. A mobile apparatus comprising at least:
means for storing first subscriber information for attaching to a first network;
means for storing for at least one second network, per a second network, second subscriber information for attaching to the second network and geographical information at least indicating geographical area of the second network, wherein a second network is preferred over the first network and has a geographical area at least partially overlapping with the first network;
means for attaching to a network using corresponding subscriber information;
means for establishing, after being attached to a network, sessions for data traffic via the network;
means for obtaining location information of the mobile apparatus;
means for determining, when the mobile apparatus is attached to the first network and the location information has been obtained, whether the apparatus is within a geographical area of a second network;
means for performing, when the mobile apparatus is within the geographical area of the second network and attached to the first network, a decision to switch from the first network to the second network;
means for transmitting to a trusted platform entity, via the first network, an indication of a decision to switch from the first network to the second network; and
means for performing the switch after receiving from the trusted platform entity information confirming the decision.

2. The mobile apparatus of claim 1, further comprising:
means for storing for the trusted platform entity an identifier, not usable to access the first network and the at least one second network,
wherein the means for transmitting to the trusted platform entity are configured to transmit indications of a decision with the identifier.

3. The mobile apparatus of claim 1 or 2, further comprising:
means for determining, when the mobile apparatus is attached to the second network and the location information has been obtained, whether the mobile apparatus is exiting the geographical area of the second network;
means for performing, when the mobile apparatus is exiting the geographical area of the second network, a decision to switch from the second network to the first network; and
means for transmitting to the trusted platform entity, via the second network, an indication of a decision to switch from the second network to the first network.

4. The mobile apparatus of any preceding claim, wherein the information confirming the decision is a request to set up a security context with the second network and/or perform a handover to the second network.

5. The mobile apparatus of any preceding claim, the mobile apparatus comprising at least one processor, and at least one memory including computer program code, wherein the at least one processor with the at least one memory and computer program code provide said means.

6. An apparatus for a trusted party platform entity, the apparatus comprising:
means for receiving, via a first network, from a mobile apparatus, at least an indication of a decision to switch from the first network to a second network;
means for determining, whether the second network is online;
means for triggering, when the second network is online, path establishment between the first network and the second network;
means for receiving information indicating that the path has been established; and
means for transmitting, when the second network is online and the path has been established, to the mobile apparatus information confirming the decision.

7. The apparatus of claim 6, further comprising:
means for transmitting, when the second network is online, to the second network at least a request to set up a security context for the mobile apparatus

8. The apparatus of claim 6 or 7, wherein the means for triggering are configured to orchestrate transitions of one or more ongoing sessions of the mobile apparatus from the first network to the second network while maintaining, per a session, the session as ongoing for data traffic during a transition of the session.

9. The apparatus of claim 6, 7 or 8, wherein the means for triggering are configured to transmit to the first network a request to forward data traffic targeted to the mobile apparatus to the second network and to transmit to the second network a request to buffer the data traffic received from the first network until the mobile apparatus has attached to the second network.

10. The apparatus of claim 6, 7 or 8, wherein the means for triggering are configured to transmit to the first network a request to forward data traffic targeted to the mobile apparatus both to the mobile apparatus and to the second network, to detect, per a transition of a session from the first network to the second network, that the transition is completed and to update, after the transition is completed, the session to pass via the second network.

11. The apparatus of claim 9 or 10, wherein the request to forward data traffic comprises an indication to use multipath transmission control protocol or mobile internet protocol.

12. The apparatus of any of claims 6 to 11, the apparatus comprising at least one processor, and at least one memory including computer program code, wherein the at least one processor with the at least one memory and computer program code provide said means.

13. A method comprising:
storing first subscriber information for attaching to a first network;
storing for at least one second network, per a second network, second subscriber information for attaching to the second network and geographical information at least indicating geographical area of the second network, wherein a second network is preferred over the first network and has a geographical area at least partially overlapping with the first network;
attaching to a network using corresponding subscriber information;
establishing, after being attached to a network, at least one session for data traffic via the network;
obtaining location information;
determining, when attached to the first network and the location information has been obtained, whether location is within a geographical area of a second network;
performing, when attached to the first network and the location is within the geographical area of the second network, a decision to switch from the first network to the second network;
transmitting to a trusted platform entity, via the first network, an indication of a decision to switch from the first network to the second network; and
performing the switch after receiving from the trusted platform entity information confirming the decision.

14. A method comprising:
receiving, via a first network, from a mobile apparatus, at least an indication of a decision to switch from the first network to a second network;
determining, whether the second network is online;
triggering, when the second network is online, path establishment between the first network and the second network;
receiving information indicating that the path has been established; and
transmitting, when the second network is online and the path has been established, to the mobile apparatus information confirming the decision.

15. A computer readable medium comprising instructions which, when executed by an apparatus, cause the apparatus to perform at least a first process or a second process,
wherein the first process comprises at least:
storing first subscriber information for attaching to a first network;
storing for at least one second network, per a second network, second subscriber information for attaching to the second network and geographical information at least indicating geographical area of the second network, wherein a second network is preferred over the first network and has a geographical area at least partially overlapping with the first network;
attaching to a network using corresponding subscriber information;
establishing, after being attached to a network, at least one session for data traffic via the network;
obtaining location information of the apparatus;
determining, when the apparatus is attached to the first network and the location information has been obtained, whether the apparatus is within a geographical area of a second network;
performing, when the apparatus is within the geographical area of the second network and attached to the first network, a decision to switch from the first network to the second network;
transmitting to a trusted platform entity, via the first network, an indication of a decision to switch from the first network to the second network; and
performing the switch after receiving from the trusted platform entity information confirming the decision,
wherein the second process comprises at least:
receiving, via the first network, from a mobile apparatus, at least the indication of a decision to switch from the first network to the second network;
determining, whether the second network is online;
triggering, when the second network is online, path establishment between the first network and the second network;
receiving information indicating that the path has been established; and
transmitting, when the second network is online and the path has been established, to the mobile apparatus information confirming the decision.
